# EUROPÄISCHE PATENTSCHRIFT

(11) **EP 1 006 027 B1**
(45) Veröffentlichungstag und Bekanntmachung des Hinweises auf die Patenterteilung: **06.04.2005**
(21) Anmeldenummer: 99123907.0
(22) Anmeldetag: 01.12.1999
(51) Int. Cl.: B60R 21/16

(54) **Aufprall-Schutzvorrichtung für Kraftfahrzeuge**
Crash protection device for vehicles
Dispositif de protection en cas d'accident pour véhicules

(30) Priorität: 03.12.1998 DE 29821621 U
(43) Veröffentlichungstag der Anmeldung: 07.06.2000
(73) Patentinhaber: TRW Automotive Safety Systems GmbH, 63743 Aschaffenburg (DE)
(72) Erfinder: Kreuzer, Martin, 63839 Kleinwallstadt (DE)
(74) Vertreter: Degwert, Hartmut, Dipl.-Phys.

(56) Entgegenhaltungen:
- EP-A- 0 657 329
- US-A- 5 253 892
- PATENT ABSTRACTS OF JAPAN vol. 1998, no. 10, 31. August 1998 (1998-08-31) -& JP 10 119693 A (NISSAN DIESEL MOTOR CO LTD), 12. Mai 1998 (1998-05-12)

## Beschreibung

Die Erfindung betrifft eine Aufprall-Schutzvorrichtung für die Anordnung in Kraftfahrzeug-Lenkrädern gemäß dem Oberbegriff von Patentanspruch 1.

Derartige Aufprall-Schutzvorrichtungen, sog. Airbags, sind für die Anordnung in PKW-Lenkräder seit vielen Jahren bekannt und gehören bei modernen Personenkraftwagen inzwischen zur Serienausstattung.

Lenkrad-Airbags werden in zunehmendem Umfang auch für Lastkraftwagen konzipiert und angeboten, wobei die im Vergleich zu Personenkraftwagen meist wesentlich steiler angeordnete Lenksäule bzw. der flacher liegende Lenkradkranz die Ursache dafür sind, daß bei einer unveränderten Übernahme von PKW-Airbags für LKW-Lenkräder keine optimale Schutzwirkung erzielt werden kann.

Bei PKW-Lenkrädern erreicht der expandierte Gassack eine Form, bei der die Aufprallfläche etwa parallel zum Lenkradkranz liegt. Diese Aufprallfläche verläuft etwa senkrecht zur Aufprallrichtung des Oberkörpers des PKW-Fahrers, so daß bei einem Unfall die größtmögliche Aufprallfläche und damit der bestmögliche Aufprallschutz erreicht werden kann.

Würde man die für PKW-Lenkräder entwickelte Aufprall-Schutzvorrichtung unverändert auf LKW-Lenkräder übertragen, würde sich eine Aufprallfläche des Gassacks ergeben, die unter einem mehr oder weniger großen Winkel zum Oberkörper des aufprallenden LKW-Fahrers steht und die bei einem Unfall zuerst unten und dann fortschreitend nach oben kontaktiert werden würde. Ein derartiges Aufprallverhalten würde dazu führen, daß die Aufprallfläche anfangs relativ klein ist und daß der aufgeblasene Gassack in Fahrtrichtung verschoben werden würde. Daraus ergibt sich die Gefahr, daß ein Aufprall des LKW-Fahrers auf den unteren Teil des Lenkrades unvermeidlich ist und daß nur eine höchst unvollkommene Schutzwirkung erzielt wird.

Aus der US-A-5 253 892 ist ein Gassack für ein Lenkrad bekannt, der im aufgeblasenen Zustand den Lenkradkranz übergreift. Der Gassack ist besonders für den Einsatz von horizontal im Fahrzeug angeordneten Lenkrädern geeignet.

JP 1 011 963 A offenbart ein Lenkrad der sich beim Unfall nach unten faltet.

Der Erfindung liegt die Aufgabe zugrunde, die sich aus der unterschiedlichen Anordnung des Lenkradkranzes bei Lastkraftwagen im Vergleich zu Personenkraftwagen ergebenden Nachteile üblicher Aufprall-Schutzvorrichtungen zu vermeiden und diese Schutzvorrichtungen dahingehend abzuwandeln, daß bei ihrer Verwendung im Zusammenhang mit LKW-Lenkrädern eine bessere Schutzwirkung erzielt werden kann.

Zur Lösung dieser Aufgabe wird erfindungsgemäß ein Gassack mit den im kennzeichnenden Teil von Patentanspruch 1 angegebehen Merkmalen vorgeschhlagen.

Die Form eines aufgeblasenen Gassacks hängt vom Zuschnitt der verwendeten Gewebestücke und der Verwendung von Fangbändern ab. Die Form des aufgeblasenen Gassacks kann daher in großem Umfang beeinflußt werden, wobei durch Versuche leicht festgestellt werden kann, ob sich beispielsweise im Hinblick auf das Entfaltungs-Verhalten Gestaltungsgrenzen ergeben.

Wird der Gassack so gestaltet, daß er in aufgeblasenem Zustand die erfindungsgemäß geforderte Pilzform aufweist, so wird einmal erreicht, daß der kritische, untere Lenkradbereich bei LKW-Lenkrädern abgedeckt wird und daß zum andern ein Verschieben des Gassacks parallel zur Ebene des Lenkradkranzes weitgehend verhindert wird.

Der Zusammen mit dem Gassack aktivierbare Anschlag ist spontan aus einer Ruheposition in eine Arbeitsposition verstellbar und verhindert in der Arbeitsposition ein Verschieben des Gassacks parallel und relativ zum Lenkradkranz. Ein derartiger Anschlag wird in zweckmäßiger Weise durch einen pyrotechnischen Stellantrieb bewegt, wie er zur Straffung von Anschnallgurten bekannt ist.

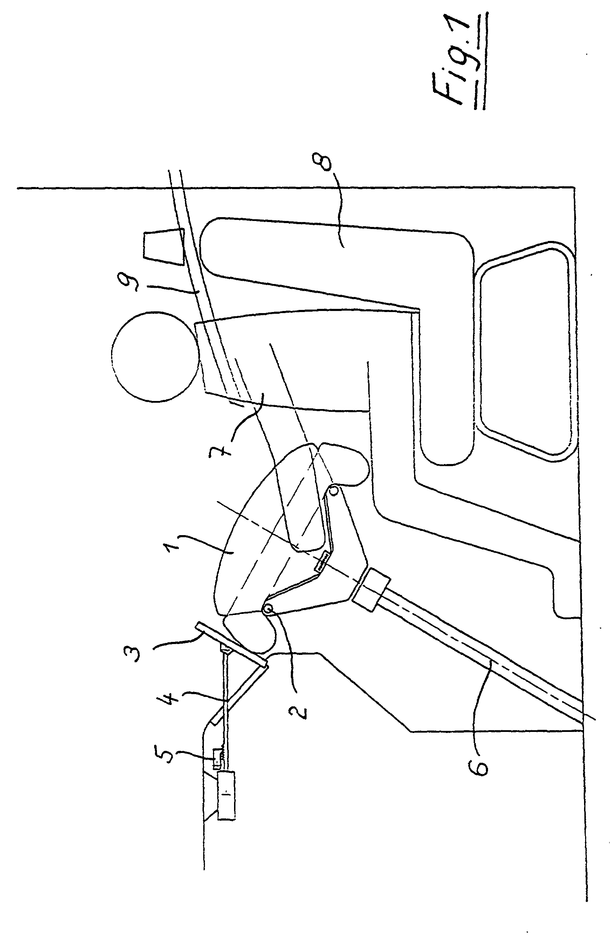

In Figur 1 ist schematisch vereinfacht eine Ausführungsform des Erfindungsgedankens in der Seitenansicht dargestellt. Mit 1 ist ein Gassack bezeichnet, der in aufgeblasenem Zustand eine pilzartige, den Lenkradkranz 2 übergreifende Form aufweist. Mit 3 ist ein Anschlag bezeichnet, der aus einer Ruheposition im Armaturenbrett, in Fahrtrichtung vor dem Lenkrad in die dargestellte Arbeitsposition klappbar ist und in dieser Position ein Verschieben des Gassacks parallel zum Lenkradkranz verhindert. Im dargestellten Ausführungsbeispiel wird der Anschlag mittels einer pyrotechnisch aktivierbaren Stange 4 aus der Ruheposition in die Arbeitsposition bewegt, wobei eine Rasteinrichtung 5 dafür sorgt, daß der Anschlag 3 in der Arbeitsposition arretiert wird.

Die Lenksäule 6 ist ersichtlich wesentlich steiler angestellt als bei Personenkraftwagen, woraus sich die flachere Anordnung des Lenkradkranzes 2 ergibt. Mit 7 ist der LKW-Fahrer angedeutet und mit 8 der Fahrersitz bzw. mit 9 der Anschnallgurt bezeichnet.

Die schematische, hinsichtlich Sitzposition und Proportionen aber realistische Darstellung zeigt, daß der erfindungsgemäß den Lenkradkranz 2 übergreifende Gassack am Ende des Aufprallvorgang auch einen guten Aufprallschutz für den Kopf des LKW-Fahrers bietet, falls der Anschnallgurt 9 eine derart starke Vorwärtsbewegung nicht verhindern kann. Damit ist eine Aufprall-Schutzvorrichtung für LKW-Lenkräder geschaffen, die trotz der ungünstigen Position der Lenksäule 6 bzw. des Lenkradkranzes 2 einen optimalen Schutz für den LKW-Fahrer bietet.

## Patentansprüche

1. Aufprall-Schutzvorrichtung für die Anordnung in Kraftfahrzeug-Lenkrädern, deren Kranz in einer Ebene liegt, die um weniger als 45 Grad zur Fahrzeuglängsachse bzw. zur Horizontalebene geneigt ist, mit einem zusammengefaltet montierten, aufblasbaren Gassack und einem beschleunigungsabhängig aktivierbaren Gasgenerator, wobei der Gassack (1) in aufgeblasenem Zustand eine den Lenkradkranz (2) übergreifende, pilzartige Form aufweist, **dadurch gekennzeichnet, daß** ein zusammen mit dem Gassack (1) aktivierbarer Anschlag (3) vorgesehen ist, der spontan aus einer Ruheposition im Armaturenbrett in eine Arbeitsposition verstellbar ist und der in der Arbeitsposition ein Verschieben des Gassacks (1) parallel und relativ zum Lenkradkranz (2) verhindert.

2. Aufprall-Schutzvorrichtung nach Anspruch 1, **dadurch gekennzeichnet, daß** zur Verstellung des Anschlags (3) ein pyrotechnischer Stellantrieb verwendet ist.

## Claims

1. An impact protection device for arrangement in a motor vehicle steering wheel the rim of which is located in a plane inclined at an angle of less than 45 degrees to the longitudinal axis of the vehicle or the horizontal plane, comprising an inflatable gas bag mounted in a folded condition and an inflator adapted to be activated as a function of acceleration, the gas bag (1), in the inflated condition, having a mushroom-like shape and engaging beyond the steering wheel rim (2), **characterized in that** a stop (3) is provided which can be activated together with the gas bag (1) and can be shifted spontaneously from a resting position in the instrument panel to a working position and which, in the working position, prevents the gas bag (1) from being displaced parallel and relative to the steering wheel rim (2).

2. The impact protection device as set forth in claim 1, **characterized in that** a pyrotechnic actuating drive is used for shifting the stop (3).

## Revendications

1. Dispositif de protection contre les impacts, destiné à être agencé dans des volants de direction de véhicules, dont la couronne se trouve dans un plan qui est incliné de moins de 45 degrés par rapport à l'axe longitudinal du véhicule ou par rapport au plan horizontal, respectivement, comportant un coussin à gaz gonflable monté plié et un générateur de gaz activable en fonction de l'accélération, le coussin à gaz (1) présentant à l'état gonflé une forme de champignon recouvrant la couronne de volant de direction (2), **caractérisé en ce qu'**il est prévu une butée (3) activable conjointement avec le coussin à gaz (1), laquelle est déplacable spontanément depuis une position de repos dans le tableau de bord jusque dans une position de travail et qui, dans la position de travail, empêche un déplacement du coussin à gaz (1) parallèlement et par rapport à la couronne de volant de direction (2).

2. Dispositif de protection contre les impacts selon la revendication 1, **caractérisé en ce qu'**on utilise un mécanisme pyrotechnique de déplacement pour déplacer la butée (3).
